# EUROPÄISCHE PATENTSCHRIFT

(11) **EP 2 574 395 B1**
(45) Veröffentlichungstag und Bekanntmachung des Hinweises auf die Patenterteilung: **12.08.2015**
(21) Anmeldenummer: 12181962.7
(22) Anmeldetag: 28.08.2012
(51) Int. Cl.: B01F 3/04, B01F 7/00, C02F 3/20, C02F 3/16

(54) **Misch- und Belüftungsvorrichtung sowie Verfahren zum Mischen und Belüften**
Mixing and ventilation device and method for mixing and ventilating
Dispositif d'aération et de mélange et procédé de mélange et d'aération

(30) Priorität: 29.09.2011 DE 102011114495
(43) Veröffentlichungstag der Anmeldung: 03.04.2013
(73) Patentinhaber: KSB Aktiengesellschaft, 67227 Frankenthal (DE)
(72) Erfinder: Jäger, Christoph, 67229 Gerolsheim (DE); Strate, Oliver, 32791 Lage (DE); Wiehl, Stefan, 22964 Steinburg (DE); Witzel, Rolf, 36157 Ebersburg (DE); Braun, Heinrich, 67227 Frankenthal (DE); Bucher, Matthias, 68535 Edingen-Neckarhausen (DE)

(56) Entgegenhaltungen:
- EP-A2- 2 113 670
- WO-A1-02/38510
- WO-A1-90/10602
- DE-A1- 2 455 455
- DE-A1- 2 844 379
- DE-A1- 3 016 580
- DE-A1- 3 407 370
- DE-A1- 3 417 039
- DE-A1- 3 425 791
- DE-A1- 3 427 584
- DE-A1- 3 640 964
- DE-C1- 3 139 689
- DE-U1- 29 600 714
- JP-A- 63 256 194
- JP-U- 57 021 099
- US-A- 3 108 146
- US-A- 3 778 233
- US-A- 4 313 898
- US-A- 4 409 100

## Beschreibung

Die Erfindung betrifft eine Misch- und Belüftungsvorrichtung entsprechend Anspruch 1 zum Mischen und Belüften einer Flüssigkeit, insbesondere Wassermasse, in einem Becken einer Flüssigkeitsbehandlungseinrichtung, insbesondere Wasserbehandlungseinrichtung, mit einem Misch- und Belüftungsaggregat mit einem ein erstes Gehäuseteil und ein zweites Gehäuseteil umfassendes Gehäuse, einem in dem ersten Gehäuseteil angeordneten Elektromotor, einer sich durch das erste und zweite Gehäuseteil erstreckenden Welle, die an einem ersten Wellenende von dem Elektromotor um eine Drehachse drehend angetrieben wird, einer mit einem dem ersten Wellenende gegenüberliegenden zweiten Wellenende verbundene Nabe, wenigstens zwei an der Nabe angeordneten Schaufeln und einem an das Gehäuse angeschlossenen Luftzuführrohr, wobei an einer Verbindungsstelle von erstem und zweitem Gehäuseteil angrenzend, das erste Gehäuseteil eine Anschlussvorrichtung mit einer sich in radialer Richtung bezüglich der Drehachse erstreckenden Öffnung aufweist, wobei an der Anschlussvorrichtung das Luftzuführrohr angeschlossen ist. Die Erfindung betrifft ferner ein Verfahren entsprechend Anspruch 15 mit einer solchen Vorrichtung.

Eine gattungsgemäße Misch- und Belüftungsvorrichtung zum biologischen Aufbessern einer Wassermasse ist aus der DE 31 39 689 C1 bekannt. Die DE 31 39 689 C1 zeigt eine Vorrichtung zum Einbringen von Behandlungsstoffen zum Verbessern verschmutzten Wassers, mittels eines frei im Wasser angeordneten, von einem Motor über eine Welle angetriebenen Axialrades bzw. Wasser-Propellers zum Zuführen von einem oder mehreren Behandlungsstoffen in einen zur Drehachse des Axialrades koaxialen, zylinderförmigen, durch das Axialrad gebildeten Arbeitsraum, wobei eine, eine Vielzahl von kleinen Öffnungen aufweisende Zuführvorrichtung für die Behandlungsstoffe vor dem Arbeitsraum des Axialrades angeordnet ist.

Aus der DE 34 17 039 A1 ist eine Vorrichtung zum Einbringen von BehandlungsstoffNahrungsstoff in Wasser bzw. Abwasser bekannt, die zusätzlich in der Zuführvorrichtung einen Verdrängungskörper aufweist, der mit dem Axialrad umlaufend angeordnet ist.

Eine weitere Vorrichtung zum Einbringen von Behandlungsstoff-Nahrungsstoff in Wasser bzw. Abwasser ist aus der DE 34 07 370 A1 bekannt, die eine Vorrichtung entsprechend dem Oberbegriff des Anspruchs 1 offenbart, bei der die Öffnungen in der Zuführvorrichtung als feinste Schlitze, Löcher, Poren oder dergleichen ausgebildet sind. Die Öffnungen erlauben ein ungehindertes Durchfließen des bei Umlauf der Zuführvorrichtung von innen zugeführten Behandjungsstoffes nach außen, während bei stehender Zuführvorrichtung das von außen anfließende Schmutzwasser zurückgehalten und gefiltert wird, wobei sich der vom Schmutzwasser mitgeführte Schmutz vor den Öffnungen anlagert.

Bei der DE 34 25 791 A1 treibt ein Unterwassermotor über eine Welle einen Propeller an, wobei sich die Welle durch einen an den Unterwassermotor angebauten Trichter erstreckt. Der Propeller ist mit einer Nabe auf der Welle geführt, kann sich auf dieser drehen und wird in einer Hohlnabe von einer einstellbaren Reibkupplung mitgenommen. Die Hohlnabe wird von einer Kappe verschlossen. Das dem Motor abgewandte Vorderteil des Trichters umfasst oder umgibt den Außendurchmesser der Hohlnabe ohne diese zu berühren, somit verbleibt für das Belüften ein Spalt, der als Ringspalt oder wie ein Keilnabenprofil ausgeführt sein kann. Zum Belüften der Wassermasse ist ein Luftzuführrohr über einen Zuführstutzen an den Trichter angeschlossen. Beim Antreiben des Propellers, saugt dieser aus der Wassermasse Wasser in einen den Propeller umgebenden Propellerraum und stößt dieses Wasser aus. Beim raschen Vorbeifließen des Wassers am Ringspalt entsteht dort ein Unterdruck, wodurch Außenluft über das Luftzuführrohr in den Trichter angesaugt und bei dem Ringspalt in das vorbei fließende Wasser eingewirbelt und mit Wasser als Wasser-Luftblasen-Strahl ausgestoßen wird. Nachteilig dabei ist, dass das Aggregat an einer zusätzlich zur Verfügung gestellten Halterung angebracht werden muss und dass das Aggregat komplex aufgebaut ist.

Die US 4,313,898 beschreibt einen Radialinjektor mit einer sich drehenden Scheibe, mittels derer Luft bzw. Gase aus der Atmosphäre angesaugt und mit einem die Scheibe kontaktierenden Fluid vermischt werden. Das Fluid-Luft-/Gasgemisch wird radial beschleunigt aus dem Radialinjektor ausgestoßen.

Die Aufgabe der Erfindung besteht darin, eine Misch- und Belüftungsvorrichtung zum Belüften und Mischen einer Flüssigkeit, insbesondere von Wasser, in einem Becken einer Flüssigkeitsbehandlungseinrichtung, insbesondere in einer Wasserbehandlungseinrichtung, zu schaffen, bei der ein Misch- und Belüftungsaggregat ohne zusätzliche Halterungsvorrichtungen auskommt und einen einfachen Aufbau aufweist.

Die Aufgabe wird erfindungsgemäß durch die Merkmale des kennzeichnenden Teils des Anspruch 1 gelöst.

Für die Misch- und Belüftungsvorrichtung können somit Gehäuseteile verwendet werden, die bereits bei anderen Aggregaten, beispielsweise Kreiselpumpen, ihre Anwendung finden.

Nach einer Ausgestaltung erstreckt sich die Welle von einem mittels dem ersten Gehäuseteil begrenzten Innenraum in einen weiteren, durch das erste und zweite Gehäuseteil gebildeten Innenraum.

Die beiden Innenräume werden durch eine Wandung, die innerhalb des ersten Gehäuseteils angeordnet ist, fluiddicht getrennt, wodurch ein zuverlässiger Betrieb des Misch- und Belüftungsaggregats erreicht wird.

Als Vorteil für eine gute Durchmischung und Belüftung hat sich eine Ausgestaltung erwiesen, wonach an dem Nabenkörper mehrere Schaufeln ausgebildet sind, die sich im Wesentlichen in radialer Richtung vom Nabenkörper weg erstrecken, und nahe den Schaufeln, zwischen diesen und dem zweiten Gehäuseteil, sich im Wesentlichen radial durch den Nabenkörper erstreckende Durchgangsöffnungen vorgesehen sind.

Nach einer weiteren Ausgestaltung ist es vorgesehen, dass sich das an der Anschlussvorrichtung des Misch- und Belüftungsaggregats befestigte Luftzuführrohr durch ein Überrohr einer über dem Becken platzierten Halte- und/oder Verstellvorrichtung erstreckt.

Als besonders zuverlässig hat sich eine Ausgestaltung erwiesen, wonach sich das Überrohr durch eine in einer Trägerplatte der Halte- und/oder Verstellvorrichtung ausgebildeten Öffnung erstreckt.

Eine sehr stabile Verbindung von Überrohr und Trägerplatte ergibt sich, wenn eine Versteifungsplatte sowohl mit dem Überrohr als auch mit der Trägerplatte verbunden ist.

Zum einfachen Positionieren und Stabilisieren der Misch- und Belüftungsvörrichtung über dem Becken 1, ist die Trägerplatte mit einer ersten Tragschiene und einer zweiten Tragschiene verbunden, die sich über das Becken erstrecken.

Um einen sicheren und zuverlässigen Betrieb durch eine bestimmte Ausrichtung des Misch- und Belüftungsaggregats zu erreichen, ist das Luftzuführrohr in dem Überrohr in der Höhe verstellbar und relativ zum Überrohr verdrehbar angeordnet.

Nach einer alternativen Ausgestaltung der Erfindung ist das Überrohr entlang einer Rohrmittellängsachse geteilt ausgebildet, um das Misch- und Belüftungsaggregat aus der Halte- und/oder Verstellvorrichtung ausbauen zu können.

Zum bedienungsfreundlichen Durchführen von möglichen Wartungsarbeiten, sind idealerweise die beiden Teile des Überrohrs mittels mehreren Scharnieren und/oder wenigstens einem Scharnierband relativ zueinander verdreh- oder aufklappbar verbunden, wobei eine oder mehrere Schließvorrichtungen auf der den Scharnieren im Wesentlichen gegenüberliegenden Seite angeordnet sind.

Die Wartungsarbeiten werden weiterhin durch eine Ausgestaltung erleichtert, wonach die Halte- und/oder Verstellvorrichtung ein sich über das Becken erstreckendes Schienenelement umfasst.

Dazu weist das Schienenelement eine sich über die selbige erstreckende erste Nut, in die die erste Tragschiene eingesetzt ist, und eine sich auf die gleiche Weise erstreckende zweite Nut auf, in welche die zweite Tragschiene eingesetzt ist.

Zum sicheren Halten des Misch- und Belüftungsaggregats an seiner für den Betrieb vorgesehenen Position, ist die erste Tragschiene mit wenigstens einer Befestigungsvorrichtung relativ zum Schienenelement fixierbar.

Bei einem Verfahren zum Mischen und Belüften einer Flüssigkeit, insbesondere einer Wassermasse, in einem Becken einer Flüssigkeitsbehandlungseinrichtung, insbesondere einer Wasserbehandlungseinrichtung, kommt eine erfindungsgemäße Misch- und Belüftungsvorrichtung zum Einsatz.

Ausführungsbeispiele der Erfindung sind in der Zeichnung dargestellt und werden im Folgenden näher beschrieben. Es zeigt die
- Fig. 1: ein Becken mit einer Wassermasse und einer erfindungsgemäßen Misch- und Belüftungsvorrichtung zum biologischen Aufbessern der Wassermasse, die
- Fig. 2: ein Misch- und Belüftungsaggregat der Misch- und Belüftungsvorrichtung gemäß Fig. 1 in einer detaillierten Schnittdarstellung, die
- Fig. 3: eine Halte- und/oder Verstellvorrichtung der erfindungsgemäßen Misch- und Belüftungsvorrichtung zum Halten des Misch- und Belüftungsaggregats gemäß Fig. 2 in einer detaillierten Schnittdarstellung, die
- Fig. 4: eine weitere Ausführungsform der Halte- und/oder Verstellvorrichtung der erfindungsgemäßen Misch- und Belüftungsvorrichtung in einer detaillierten Schnittdarstellung, die
- Fig. 5: eine Schnittdarstellung gemäß der Linie A-A in Fig. 4 und die
- Fig. 6: eine weitere Ausgestaltung der Halte- und/oder Verstellvorrichtung gemäß Figur 3 oder 4 in einer detaillierten Schnittdarstellung.

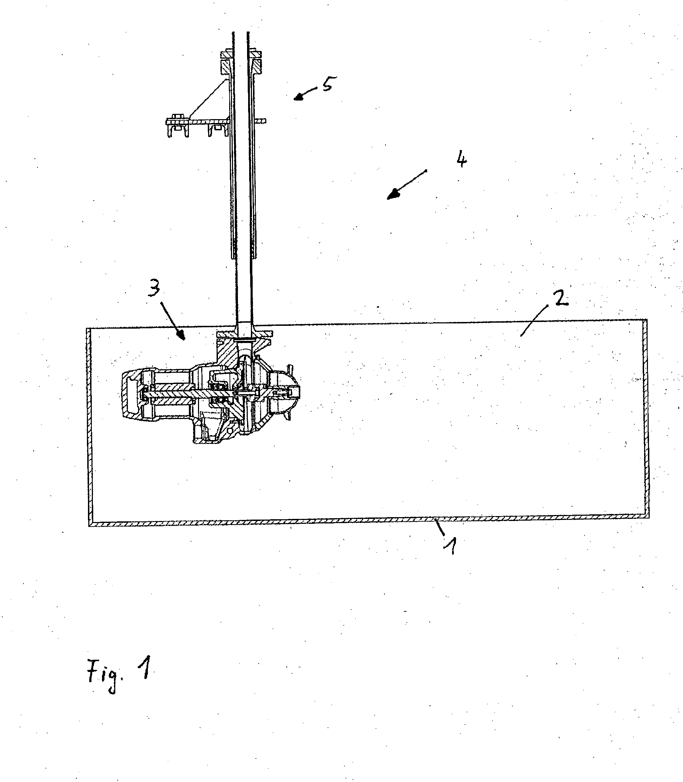

Die Fig. 1 zeigt ein Becken 1, beispielsweise ein Klärbecken oder ein Wasserbecken in einer Abwasserpumpstation oder dergleichen. Unterhalb der Oberfläche einer in dem Becken 1 befindlichen Abwasser- oder Wassermasse 2 ist ein Misch- und Belüftungaggregat 3 einer Misch- und Belüftungsvorrichtung 4 zum Belüften und Mischen der Wassermasse 2 angeordnet, das über eine Halte- und/oder Verstellvorrichtung 5 in seiner Position gehalten wird.

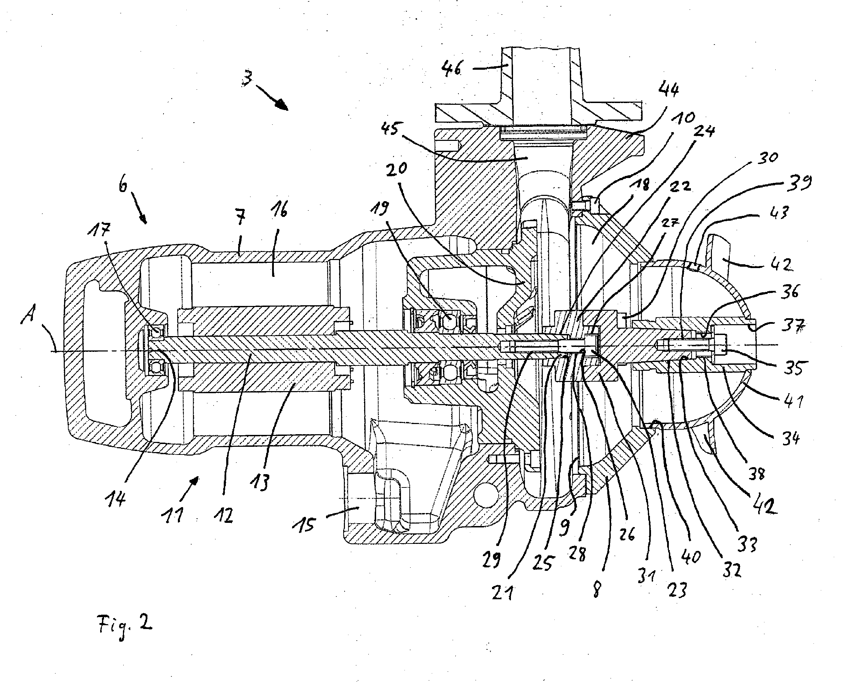

Die Fig. 2 zeigt das erfindungsgemäße Misch- und Belüftungsaggregat 3 im Detail. Das Misch- und Belüftungsaggregat 3 umfasst ein Gehäuse 6 mit einem ersten Gehäuseteil 7 und einem zweiten Gehäuseteil 8. Erstes und zweites Gehäuseteil sind an einer Verbindungsstelle 9 mittels mehrerer Schrauben 10, von denen nur eine dargestellt ist, miteinander verbunden. Zwischen beiden Gehäuseteilen kann noch eine nicht dargestellte Dichtung vorgesehen sein. In dem ersten Gehäuseteil 7 ist ein Elektromotor 11, insbesondere ein explosionsgeschützter Elektromotor, angeordnet, der durch einen auf einer Welle 12 platzierten elektrischen Rotor 13 nahe einem ersten Wellenende 14 und einen um den Rotor 13 angeordneten, jedoch nicht dargestellten Stator gebildet wird. Der Elektromotor treibt die Welle 12 um eine Drehachse A drehend an. Der elektrische Anschluss erfolgt über nicht dargestellte Leitungen, die sich abgedichtet durch die Anschlussöffnung 15 erstrecken.

Die Welle 12 erstreckt sich von einem mittels dem ersten Gehäuseteil 7 begrenzten Innenraum 16, wobei die Welle 12 in einem ersten Wellenlager 17 gelagert ist, in einen weiteren, durch das erste und zweite Gehäuseteil 7, 8 gebildeten Innenraum 18. Die beiden Innenräume 16, 18 werden durch eine ein zweites Wellenlager 19 tragende Wandung 20, die innerhalb des ersten Gehäuseteils 6 angeordnet ist, fluiddicht getrennt.

Im Innenraum 18 befindlich, ist auf einem dem ersten Wellenende 14 gegenüberliegenden zweiten Wellenende 21 ein Wellenadapter 22 mittels einer koaxial zur Drehachse A angeordneten Schraube 23 an der Welle 12 befestigt. Für eine besonders gute Fixierung von Welle 12 und Wellenadapter 22 weist das zweite Wellenende 21 einen Außenkonus 24 und der Wellenadapter 22 eine entsprechend konisch ausgebildete Bohrung 25 auf. Auf der der Bohrung 25 abgewandten Seite des Wellenadapters 22 ist eine weitere, sich koaxial durch den Wellenadapter 22 erstreckende und in die Bohrung 25 mündende Bohrung 26 mit einem ersten Abschnitt 27 größeren Durchmessers und einem zweiten Abschnitt 28 kleineren Durchmessers ausgebildet, durch welche sich die Schraube 23 erstreckt und in einer koaxial zur Drehachse A ausgebildeten Gewindebohrung 29 in der Welle 12 endet.

Mittels Schrauben 30, von denen in der Schnittdarstellung nur eine zu sehen ist, ist ein Nabenadapter 31 an der dem zweiten Wellenende 21 abgewandten Seite des Wellenadapters 22 an diesem befestigt. An der dem Wellenadapter 22 gegenüberliegenden Seite des Nabenadapters 31 ist dieser mit einem Außenkonus 32 versehen, auf den eine eine Öffnung 33 mit entsprechendem Innenkonus aufweisende Nabe 34 aufsetzbar und mit einer Schraube 35 an dem Nabenadapter 31 befestigbar ist. Auf der der Öffnung 33 abgewandten Seite der Nabe 34 ist eine sich koaxial durch die Nabe 34 erstreckende und in die Öffnung 33 mündende Bohrung 36 mit einem ersten Bohrungsabschnitt 37 größeren Durchmessers und einem zweiten Bohrungsabschnitt 38 kleineren Durchmessers ausgebildet, durch welche sich die Schraube 35 erstreckt und in einer koaxial zur Drehachse A ausgebildeten Gewindebohrung 39 im Nabenadapter 31 endet.

In Fig. 2 ist die Nabe 34 über den Nabenadapter 31 und den Wellenadapter 22 mit der Welle 12 verbunden dargestellt. Alternativ wird in einer besonders bevorzugten Ausführungsform auf Wellenadapter 22 und Nabenadapter 31 verzichtet und die Nabe 34 unmittelbar, d. h. ohne Wellenadapter 22 und Nabenadapter 31, mit dem zweiten Wellenende 21 der Welle 12 verbunden, was ebenfalls im Rahmen der Erfindung liegt.

Wie die Fig. 2 weiter zeigt, weist das zweite Gehäuseteil 8 eine dem ersten Gehäuseteil 7 gegenüberliegend ausgebildete Ausnehmung 40 auf, durch welche sich, je nach Ausführung, Welle 12, Wellenadapter 22, Nabenadapter 31 und/oder Nabe 34 aus dem zweiten Gehäuseteil 8 erstreckt.

Ein hohler, domartig geformter Nabenkörper 41 ist an der dem Nabenadapter 31 gegenüberliegenden Seite der Nabe 34, also dem außerhalb des zweiten Gehäuseteils 8 angeordneten Teil der Nabe 34, an dieser befestigt, vorzugsweise angeschweißt, und erstreckt sich von der der Welle 12 abgewandten Seite der Nabe zurück in die Ausnehmung 40 des zweiten Gehäuseteils 7. Der Nabenkörper 41 umgibt dabei die Nabe 34 wenigstens teilweise. Somit erstreckt sich der Innenraum 18 bis in das Innere des Nabenkörpers 41.

An dem Nabenkörper 41 sind mehrere Schaufeln 42 ausgebildet, die sich im Wesentlichen in radialer Richtung vom Nabenkörper 41 weg erstrecken und eine an sich bekannte gebogene Form aufweisen. Nahe den Schaufeln 42, zwischen diesen und dem zweiten Gehäuseteil 8, sind sich im Wesentlichen radial durch den Nabenkörper 41 erstreckende Durchgangsöffnungen 43 vorgesehen. Die Durchgangsöffnungen 43 verbinden das Innere des Nabenkörpers 41 und somit den durch das erste und zweite Gehäuseteil gebildeten Innenraum 18 mit der äußeren Umgebung des Misch- und Belüftungsaggregats 3. Vorteilhafterweise entspricht die Anzahl der Durchgangsöffnungen 43 der Anzahl der Schaufeln 42.

An einer Verbindungsstelle 9 von erstem 7 und zweitem Gehäuseteil 8 angrenzend, weist das erste Gehäuseteil 7 eine Anschlussvorrichtung 44 mit einer sich in radialer Richtung bezüglich der Drehachse A erstreckenden Öffnung 45 auf. An der Anschlussvorrichtung 44 ist mit an sich bekannten Mitteln ein Luftzuführrohr 46 angeschlossen, welches in der in Figur 1 gezeigten Halte- und/oder Verstellvorrichtung 5 gehalten wird.

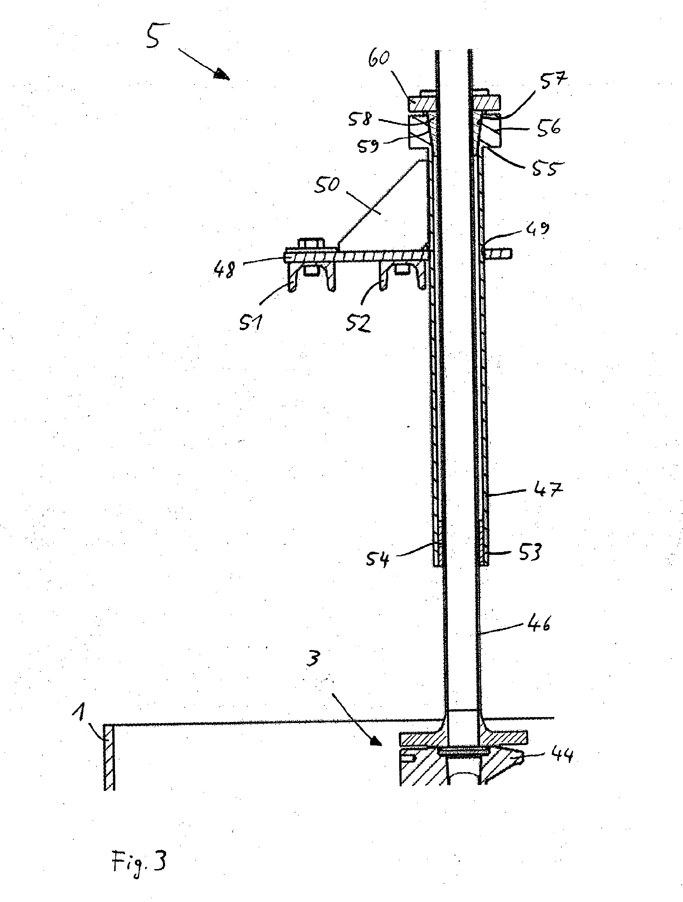

Wie der Fig. 3 zu entnehmen ist, erstreckt sich das an der Anschlussvorrichtung 44 des Misch- und Belüftungsaggregats 3 befestigte Luftzuführrohr 46 durch ein Überrohr 47 der Halte- und/oder Verstellvorrichtung 5. Das Überrohr 47 erstreckt sich wiederum durch eine in einer Trägerplatte 48 der Halte- und/oder Verstellvorrichtung 5 ausgebildeten Öffnung 49. Um die Verbindung von Überrohr 47 und Trägerplatte 48 stabiler zu gestalten, ist eine Versteifungsplatte 50 sowohl mit dem Überrohr 47 als auch mit der Trägerplatte 48, vorzugsweise mittels einer Schweißverbindung, verbunden. Zum Positionieren und stabilisieren der Misch- und Belüftungsvorrichtung 4 über dem Becken 1 ist die Trägerplatte 48 mit einer ersten Tragschiene 51 und einer zweiten Tragschiene 52 verbunden, die sich über das Becken 1 erstrecken und in geeigneter, jedoch nicht dargestellter Weise, an wenigstens einer nicht dargestellten Wand oder auf nicht dargestellten Stützen befestigt sind.

Das Luftzuführrohr 46 ist in dem Überrohr 47 in der Höhe verstellbar und relativ zum Überrohr 47 verdrehbar angeordnet. Dazu ist in dem Überrohr 47 an einem dem Misch- und Belüftungsaggregat 3 zugewandten Endabschnitt 53 des Überrohrs 47 eine Führungshülse 54 angeordnet. An einem dem Endabschnitt 53 entgegengesetzten Endabschnitt 55 des Überrohrs 47 ist ein flanschartiger Ring 56 mit einem Innenkonus 57 ausgebildet, in den eine Spannhülse 58 mit einem entsprechenden Außenkonus 59 eingesetzt ist. Mittels einer Spannmutter 60 kann die Spannhülse 58 am Endabschnitt 55 in das Überrohr 47 gedrängt werden, um so das Luftzuführrohr 46 in dem Überrohr 47 zu arretieren.

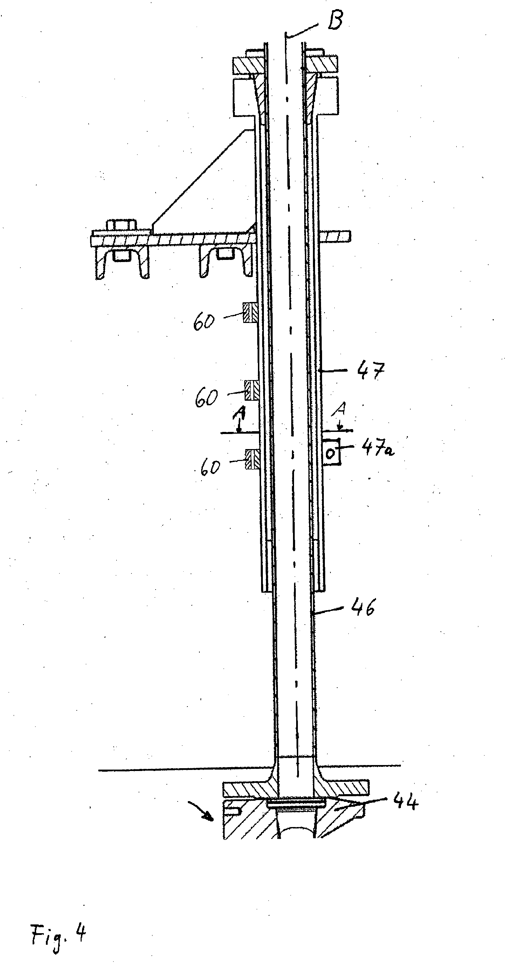

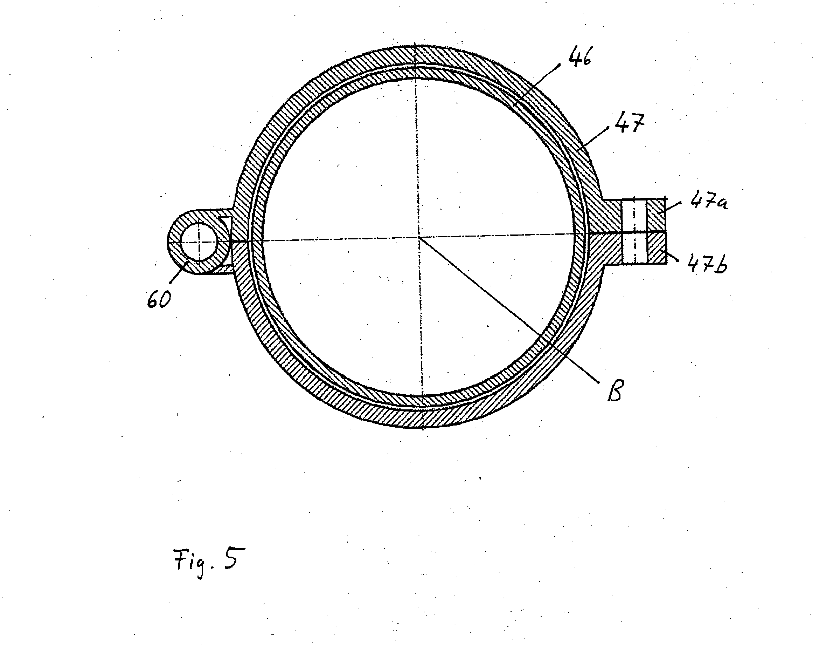

Die Fig. 4 und 5 zeigen das Überrohr 47 in einer entlang einer Rohrmittellängsachse B geteilten Ausführungsform, wobei die Fig. 5 einen Schnitt entlang der Linie A-A der in Fig. 4 veranschaulichten Ausführungsform zeigt. Die beiden Teile des Überrohrs 47 sind mittels mehreren Scharnieren 60 relativ zueinander verdreh- oder aufklappbar verbunden. Optional können auch ein oder mehrere Stangenscharniere, Bänder oder dergleichen verwendet werden. Eine oder mehrere Schließvorrichtungen 47a, 47b, die beispielsweise durch Metallfahnen gebildet sein können, die mittels Schrauben oder Klammern aneinandergehalten werden und auf der den Scharnieren 60 im Wesentlichen gegenüberliegenden Seite angeordnet sind, können die beiden Teile des Überrohrs 47 geschlossen gehalten werden, so dass das an die Anschlussvorrichtung 44 des Misch- und Belüftungsaggregats 3 angeschlossene Luftzuführrohr 46 in dem Überrohr 47 arretiert werden kann.

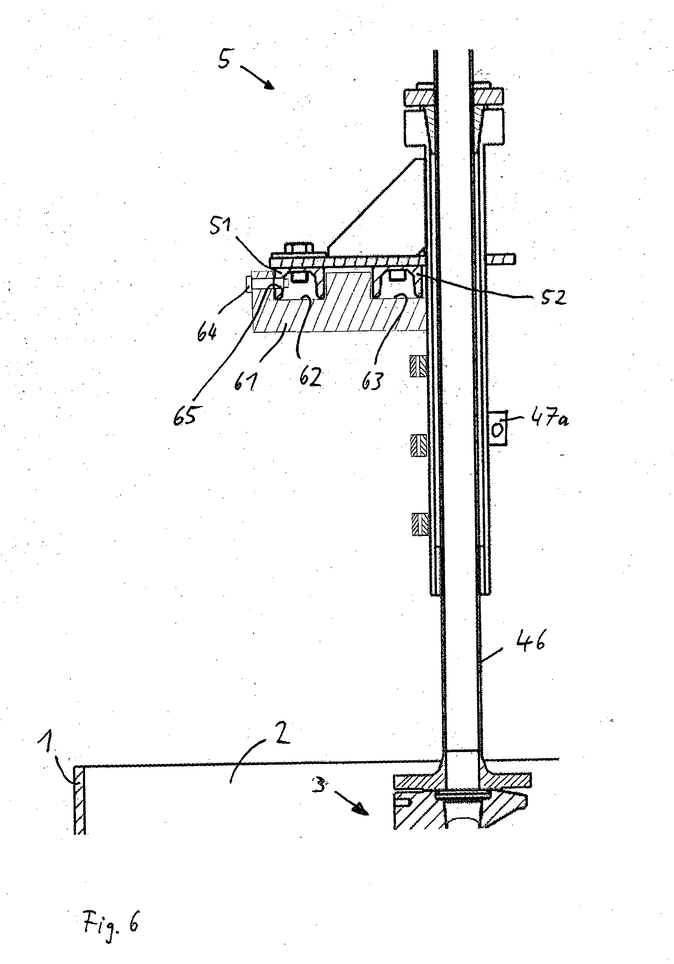

Die in der Figur 6 gezeigte Ausführungsform der Halte- und/oder Verstellvorrichtung 5 umfasst ein Schienenelement 61, das sich über das Becken 1 erstreckt und in geeigneter, jedoch nicht dargestellter Weise, an wenigstens einer nicht dargestellten Wand oder auf nicht dargestellten Stützen befestigt ist. Das Schienenelement 61 weist eine sich über das Schienenelement 61 erstreckende erste Nut 62, in die die erste Tragschiene 51 eingesetzt ist, und eine sich auf die gleiche Weise erstreckende, d.h. parallel zur ersten Nut 62 verlaufende, zweite Nut 63, in welche die zweite Tragschiene 52 eingesetzt ist, auf. Mit wenigstens einer Befestigungsvorrichtung 64, vorzugsweise einer Schraube, die in eine Bohrung 65 in der ersten Tragschiene 51 eingeschraubt ist, ist die erste Tragschiene 52 relativ zum Schienenelement 61 fixierbar.

Um das Misch- und Belüftungsaggregat 3 und das Luftzuführrohr 46 der Misch- und Belüftungsvorrichtung 4 auf einfache Weise auszubauen, wird die wenigstens eine Befestigungsvorrichtung 64 gelöst und das Misch- und Belüftungsaggregat 3 näher zum Rand des Beckens 1 geschoben und/oder die Schließvorrichtungen 47a, 47b, gelöst bzw. geöffnet und das Misch- und Belüftungsaggregat 3 aus dem Becken 1 gehoben. Ein Ablassen der Wassermasse 2 ist nicht notwendig. Bei Einsatz mehrerer derartiger Misch- und Belüftungsvorrichtungen 4 kann das Durchmischen und Belüften der Wassermasse 2 durch die anderen Misch- und Belüftungsaggregate 3 weiter durchgeführt werden.

**Bezugszeichenliste**

| | | | |
|---|---|---|---|
| 1 | Becken | 29 | Gewindebohrung |
| 2 | Wassermasse | 30 | Schraube |
| 3 | Misch- und Belüftungsaggregat | 31 | Nabenadapter |
| 4 | Misch- und Belüftungsvorrichtung | 32 | Außenkonus |
| 5 | Halte- und/oder Verstellvorrichtung | 33 | Öffnung |
| 6 | Gehäuse | 34 | Nabe |
| 7 | erstes Gehäuseteil | 35 | Schraube |
| 8 | zweitens Gehäuseteil | 36 | Bohrung |
| 9 | Verbindungsstelle | 37 | erster Bohrungsabschnitt |
| 10 | Schraube | 38 | zweiter Bohrungsabschnitt |
| 11 | Elektromotor | 39 | Gewindebohrung |
| 12 | Welle | 40 | Ausnehmung |
| 13 | Rotor | 41 | Nabenkörper |
| 14 | erstes Wellenende | 42 | Schaufel |
| 15 | Anschlussöffnung | 43 | Durchgangsöffnung |
| 16 | Innenraum | 44 | Anschlussvorrichtung |
| 17 | erstes Wellenlager | 45 | Öffnung |
| 18 | Inneraum | 46 | Luftzuführrohr |
| 19 | zweites Wellenlager | 47 | Überrohr |
| 20 | Wandung | 47a | Schließvorrichtung |
| 21 | zweites Wellenende | 47b | Schließvorrichtung |
| 22 | Wellenadapter | 48 | Trägerplatte |
| 23 | Schraube | 49 | Öffnung |
| 24 | Außenkonus | 50 | Versteifungsplatte |
| 25 | Bohrung | 51 | erste Tragschiene |
| 26 | Bohrung | 52 | zweite Tragschiene |
| 27 | erster Abschnitt | 53 | Endabschnitt |
| 28 | zweiter Abschnitt | 54 | Führungsbuchse |
| 55 | Endabschnitt | | |
| 56 | Ring | | |
| 57 | Innenkonus | | |
| 58 | Spannhülse | | |
| 59 | Außenkonus | | |
| 60 | Spannmutter | | |
| 61 | Schienenelement | | |
| 62 | erste Nut | | |
| 63 | zweite Nut | | |
| 64 | Befestigungsvorrichtung | | |
| 65 | Bohrung | | |
| A | Drehachse | | |
| B | Rohrmittellängsachse | | |

## Patentansprüche

1. Misch- und Belüftungsvorrichtung zum Mischen und Belüften einer Flüssigkeit, insbesondere Wassermasse (2), in einem Becken (1) einer Flüssigkeitsbehandlungseinrichtung, insbesondere Wasserbehandlungseinrichtung, mit einem Misch- und Belüftungsaggregat (3) mit einem ein erstes Gehäuseteil (7) und ein zweites Gehäuseteil (8) umfassendes Gehäuse (6), einem in dem ersten Gehäuseteil (7) angeordneten Elektromotor (11), einer sich durch das erste und zweite Gehäuseteil erstreckenden Welle (12), die an einem ersten Wellenende (14) von dem Elektromotor (11) um eine Drehachse (A) drehend angetriebenen wird, einer mit einem dem ersten Wellenende (14) gegenüberliegenden zweiten Wellenende (21) verbundenen Nabe (34), wenigstens zwei an der Nabe (34) angeordneten Schaufeln (42) und einem an das Gehäuse (6) angeschlossenen Luftzuführrohr (46), wobei an einer Verbindungsstelle (9) von erstem (7) und zweitem Gehäuseteil (8) angrenzend, das erste Gehäuseteil (7) eine Anschlussvorrichtung (44) mit einer sich in radialer Richtung bezüglich der Drehachse (A) erstreckenden Öffnung (45) aufweist, wobei an der Anschlussvorrichtung (44) das Luftzuführrohr (46) angeschlossen ist, wobei
das zweite Gehäuseteil (8) eine dem ersten Gehäuseteil (7) gegenüberliegend ausgebildete Ausnehmung (40) aufweist, durch welche sich die Welle (12) und/oder die mit der Welle (12) verbundene Nabe (34) aus dem zweiten Gehäuseteil (8) erstreckt und ein hohler, domartig geformter Nabenkörper (41) an der der Welle (12) abgewandten Seite der Nabe (34) an dieser befestigt ist,
**dadurch gekennzeichnet, dass**
sich der hohle, dem artig geformte Nabenkörper (41) von der der Welle (12) abgewandten Seite der Nabe (34) zurück in die Ausnehmung (40) des zweiten Gehäuseteils (8) erstreckt.

2. Vorrichtung nach Anspruch 1, **dadurch gekennzeichnet, dass** sich die Welle (12) von einem mittels dem ersten Gehäuseteil (6) begrenzten Innenraum (16) in einen weiteren, durch das erste und zweite Gehäuseteil (6, 7) gebildeten Innenraum (18) erstreckt.

3. Vorrichtung nach Anspruch 1 oder 2, **dadurch gekennzeichnet, dass** die beiden Innenräume (16, 18) durch eine Wandung (20), die innerhalb des ersten Gehäuseteils (6) angeordnet ist, fluiddicht getrennt werden.

4. Vorrichtung nach Anspruch 1, **dadurch gekennzeichnet, dass** an dem Nabenkörper (41) mehrere Schaufeln (42) ausgebildet sind, die sich im Wesentlichen in radialer Richtung vom Nabenkörper (41) weg erstrecken, und nahe den Schaufeln (42), zwischen diesen und dem zweiten Gehäuseteil (7), sich im Wesentlichen radial durch den Nabenkörper (41) erstreckende Durchgangsöffnungen (43) vorgesehen sind.

5. Vorrichtung nach einem der Ansprüche 1 bis 4, **dadurch gekennzeichnet, dass** sich das an der Anschlussvorrichtung (44) des Misch- und Belüftungsaggregats (3) befestigte Luftzuführrohr (46) durch ein Überrohr (47) einer über dem Becken (1) platzierten Halte- und/oder Verstellvorrichtung (5) erstreckt.

6. Vorrichtung nach Anspruch 5, **dadurch gekennzeichnet, dass** sich das Überrohr (47) durch eine in einer Trägerplatte (48) der Halte- und/oder Verstellvorrichtung (5) ausgebildeten Öffnung (49) erstreckt.

7. Vorrichtung nach Anspruch 6, **dadurch gekennzeichnet, dass** eine Versteifungsplatte (50) sowohl mit dem Überrohr (47) als auch mit der Trägerplatte (48) verbunden ist.

8. Vorrichtung nach einem der Ansprüche 6 oder 7, **dadurch gekennzeichnet, dass** die Trägerplatte (48) mit einer ersten Tragschiene (51) und einer zweiten Tragschiene (52) verbunden ist, die sich über das Becken (1) erstrecken.

9. Vorrichtung nach einem der Ansprüche 5 bis 8, **dadurch gekennzeichnet, dass** das Luftzuführrohr (46) in dem Überrohr (47) in der Höhe verstellbar und relativ zum Überrohr (47) verdrehbar angeordnet ist.

10. Vorrichtung nach einem der Ansprüche 5 bis 9, **dadurch gekennzeichnet, dass** das Überrohr (47) entlang einer Rohrmittellängsachse (B) geteilt ausgebildet ist.

11. Vorrichtung nach Anspruch 10, **dadurch gekennzeichnet, dass** die beiden Teile des Überrohrs (47) mittels mehreren Scharnieren (60) und/oder wenigstens einem Scharnierband relativ zueinander verdreh- oder aufklappbar verbunden sind, wobei eine oder mehrere Schließvorrichtungen (47a, 47b) auf der den Scharnieren (60) im Wesentlichen gegenüberliegenden Seite angeordnet sind.

12. Vorrichtung nach einem der Ansprüche 5 bis 11, **dadurch gekennzeichnet, dass** die Halte- und/oder Verstellvorrichtüng (4) ein sich über das Becken (1) erstreckendes Schienenelement (61) umfasst.

13. Vorrichtung nach einem der Ansprüche 8 oder 12, **dadurch gekennzeichnet, dass** das Schienenelement (61) eine sich über die selbige erstreckende erste Nut (62), in die die erste Tragschiene (51) eingesetzt ist, und eine sich auf die gleiche Weise erstreckende zweite Nut (63), in welche die zweite Tragschiene (52) eingesetzt ist, aufweist.

14. Vorrichtung nach Anspruch 13, **dadurch gekennzeichnet, dass** die erste Tragschiene (51) mit wenigstens einer Befestigungsvorrichtung (64) relativ zum Schienenelement (61) fixierbar ist.

15. Verfahren zum Mischen und Belüften einer Flüssigkeit in einem Becken einer Flüssigkeitsbehandlungseinrichtung mit einer Misch- und Belüftungsvorrichtung (4) nach einem der Ansprüche 1 bis 14.

## Claims

1. Mixing and aerating apparatus for mixing and aerating a liquid, in particular a water body (2), in a tank (1) of a liquid treatment device, in particular a water treatment device, said mixing and aerating apparatus having a mixing and aerating unit (3) with a casing (6) comprising a first casing part (7) and a second casing part (8), an electric motor (11) arranged in the first casing part (7), a shaft (12) extending through the first and second casing part, said shaft being driven in rotation at a first shaft end (14) about an axis of rotation (A) by the electric motor (11), a hub (34) connected to a second shaft end (21) opposite the first shaft end (14), at least two blades (42) arranged on the hub (34) and an air feed pipe (46) connected to the casing (6),
the first casing part (7) having a connection apparatus (44) adjacent to a connection point (9) between the first (7) and second casing part (8), said connection apparatus having an opening (45) extending in a radial direction with respect to the axis of rotation (A), the air feed pipe (46) being connected to the connection apparatus (44),
the second casing part (8) having a recess (40) formed opposite the first casing part (7), the shaft (12) and/or the hub (34) connected to the shaft (12) extending through said recess from the second casing part (8) and a hollow hub body (41) shaped in a dome-like manner being fastened to the hub (34) on the side thereof remote from the shaft (12), **characterized in that**
the hollow hub body (41) shaped in a dome-like manner extends back into the recess (40) in the second casing part (8) from the side of the hub (34) remote from the shaft (12).

2. Apparatus according to Claim 1, **characterized in that** the shaft (12) extends from an inner chamber (16) defined by means of the first casing part (7) into a further inner chamber (18) formed by the first and second casing parts (7, 8).

3. Apparatus according to Claim 1 or 2, **characterized in that** the two inner chambers (16, 18) are separated in a fluid-tight manner by a wall (20), which is arranged within the first casing part (7).

4. Apparatus according to Claim 1, **characterized in that** a plurality of blades (42) extending away from the hub body (41) substantially in the radial direction is formed on the hub body (41), and through-openings (43) extending substantially radially through the hub body (41) are provided in the vicinity of the blades (42), between said blades and the second casing part (8).

5. Apparatus according to one of Claims 1 to 4, **characterized in that** the air feed pipe (46) fastened to the connection apparatus (44) of the mixing and aerating unit (3) extends through an outer pipe (47) of a holding and/or adjusting apparatus (5) placed above the tank (1).

6. Apparatus according to Claim 5, **characterized in that** the outer pipe (47) extends through an opening (49) formed in a support plate (48) of the holding and/or adjusting apparatus (5).

7. Apparatus according to Claim 6, **characterized in that** a reinforcing plate (50) is connected both to the outer pipe (47) and to the support plate (48).

8. Apparatus according to one of Claims 6 or 7, **characterized in that** the support plate (48) is connected to a first mounting rail (51) and to a second mounting rail (52), which extend over the tank (1).

9. Apparatus according to one of Claims 5 to 8, **characterized in that** the air feed pipe (46) is arranged in the outer pipe (47) so as to be vertically adjustable and rotatable relative to the outer pipe (47).

10. Apparatus according to one of Claims 5 to 9, **characterized in that** the outer pipe (47) is divided along a central longitudinal axis (B) of the pipe.

11. Apparatus according to Claim 10, **characterized in that** the two parts of the outer pipe (47) are connected by means of a plurality of hinges (60) and/or at least one flap hinge so that they can be rotated or unfolded relative to one another, one or more locking apparatuses (47a, 47b) being arranged on the side substantially opposite the hinges (60).

12. Apparatus according to one of Claims 5 to 11, **characterized in that** the holding and/or adjusting apparatus (4) comprises a rail element (61) extending over the tank (1).

13. Apparatus according to either of Claims 8 and 12, **characterized in that** the rail element (61) has a first groove (62) extending over said element and into which the first mounting rail (51) is introduced, and a second groove (63) extending in the same manner and into which the second mounting rail (52) is introduced.

14. Apparatus according to Claim 13, **characterized in that** the first mounting rail (51) can be fixed relative to the rail element (61) by means of at least one fastening apparatus (64).

15. Method for mixing and aerating a liquid in a tank of a liquid treatment device having a mixing and aerating apparatus (4) according to one of Claims 1 to 14.

## Revendications

1. Dispositif de mélange et d'aération pour le mélange et l'aération d'un liquide, en particulier d'une masse d'eau (2), dans un bassin (1) d'un dispositif de traitement de liquide, en particulier d'un dispositif de traitement de l'eau, avec un groupe de mélange et d'aération (3) comportant un boîtier (6) comprenant une première partie de boîtier (7) et une deuxième partie de boîtier (8), un moteur électrique (11) disposé dans la première partie de boîtier (7), un arbre (12) s'étendant à travers la première et la deuxième parties de boîtier, qui est entraîné en rotation autour d'un axe de rotation (A) par le moteur électrique (11) à une première extrémité d'arbre (14), un moyeu (34) relié à une deuxième extrémité d'arbre (21) opposée à la première extrémité d'arbre (14), au moins deux aubes (42) disposées sur le moyeu (34) et un tube d'arrivée d'air (46) raccordé au boîtier (6), dans lequel, à proximité d'un endroit d'assemblage (9) de la première (7) et de la deuxième (8) parties de boîtier, la première partie de boîtier (7) présente un dispositif de raccordement (44) avec une ouverture (45) s'étendant en direction radiale par rapport à l'axe de rotation (A), dans lequel le tube d'arrivée d'air (46) est raccordé au dispositif de raccordement (44), dans lequel la deuxième partie de boîtier (8) présente un évidement (40) formé à l'opposé de la première partie de boîtier (7), à travers lequel l'arbre (12) et/ou le moyeu (34) relié à l'arbre (12) s'étend hors de la deuxième partie de boîtier (8) et un corps de moyeu creux en forme de dôme (41) est fixé au moyeu (34) sur le côté de celui-ci situé à l'opposé de l'arbre (12), **caractérisé en ce que** le corps de moyeu creux en forme de dôme (41) s'étend depuis le côté du moyeu (34) situé à l'opposé de l'arbre (12) vers l'arrière dans l'évidement (40) de la deuxième partie de boîtier (8).

2. Dispositif selon la revendication 1, **caractérisé en ce que** l'arbre (12) s'étend depuis un espace intérieur (16) délimité au moyen de la première partie de boîtier (7) jusque dans un autre espace intérieur (18) formé par la première et la deuxième parties de boîtier (7, 8).

3. Dispositif selon la revendication 1 ou 2, **caractérisé en ce que** les deux espaces intérieurs (16, 18) sont séparés de façon étanche au fluide par une paroi (20), qui est disposée à l'intérieur de la première partie de boîtier (7).

4. Dispositif selon la revendication 1, **caractérisé en ce que** plusieurs aubes (42) sont formées sur le corps de moyeu (41) et s'étendent essentiellement en direction radiale à partir du corps de moyeu (41), et il est prévu à proximité des aubes (42), entre celles-ci et la deuxième partie de boîtier (8), des ouvertures de passage (43) s'étendant essentiellement radialement à travers le corps de moyeu (41).

5. Dispositif selon l'une quelconque des revendications 1 à 4, **caractérisé en ce que** le tube d'arrivée d'air (46) fixé au dispositif de raccordement (44) du groupe de mélange et d'aération (3) s'étend à travers une gaine tubulaire (47) d'un dispositif de maintien et/ou de réglage (5) installé au-dessus du bassin (1).

6. Dispositif selon la revendication 5, **caractérisé en ce que** la gaine tubulaire (47) s'étend à travers une ouverture (49) formée dans une plaque de support (48) du dispositif de maintien et/ou de réglage (5).

7. Dispositif selon la revendication 6, **caractérisé en ce qu'**une plaque de raidissement (50) est assemblée aussi bien à la gaine tubulaire (47) qu'à la plaque de support (48).

8. Dispositif selon l'une des revendications 6 ou 7, **caractérisé en ce que** la plaque de support (48) est assemblée à un premier rail de support (51) et à un deuxième rail de support (52), qui s'étendent au-dessus du bassin (1).

9. Dispositif selon l'une quelconque des revendications 5 à 8, **caractérisé en ce que** le tube d'arrivée d'air (46) est disposé dans la gaine tubulaire (47) de façon réglable en hauteur et de façon rotative par rapport à la gaine tubulaire (47).

10. Dispositif selon l'une quelconque des revendications 5 à 9, **caractérisé en ce que** la gaine tubulaire (47) est réalisée sous forme divisée le long de l'axe longitudinal central (B) du tube.

11. Dispositif selon la revendication 10, **caractérisé en ce que** les deux parties de la gaine tubulaire (47) sont reliées de façon rotative ou rabattable l'une par rapport à l'autre au moyen de plusieurs charnières (60) et/ou d'au moins un couplet, dans lequel un ou plusieurs dispositifs de fermeture (47a, 47b) est/sont disposé(s) sur le côté essentiellement opposé aux charnières (60).

12. Dispositif selon l'une quelconque des revendications 5 à 11, **caractérisé en ce que** le dispositif de maintien et/ou de réglage (4) comprend un élément de rail (61) s'étendant au-dessus du bassin (1).

13. Dispositif selon une des revendications 8 ou 12, **caractérisé en ce que** l'élément de rail (61) présente une première rainure (62) s'étendant sur celui-ci, dans laquelle le premier rail de support (51) est inséré, et une deuxième rainure (63) s'étendant de la même façon, dans laquelle le deuxième rail de support (52) est inséré.

14. Dispositif selon la revendication 13, **caractérisé en ce que** le premier rail de support (51) peut être fixé par rapport à l'élément de rail (61) avec au moins un dispositif de fixation (64).

15. Procédé de mélange et d'aération d'un liquide dans un bassin d'un dispositif de traitement de liquide, avec un dispositif de mélange et d'aération (4) selon l'une quelconque des revendications 1 à 14.
